# EUROPEAN PATENT SPECIFICATION

(11) **EP 0 668 651 B1**
(45) Date of publication and mention of the grant of the patent: **21.10.1998**
(21) Application number: 95102190.6
(22) Date of filing: 16.02.1995
(51) Int. Cl.: H02K 7/02, F16F 15/305

(54) **Flywheel-type power storage device**
Schwungrad-Energiespeichergerät
Dispositif d'accumulateur d'énergie à volant

(30) Priority: 16.02.1994 JP 40615/94
(43) Date of publication of application: 23.08.1995
(73) Proprietor: NIPPON OIL CO. LTD., Minato-ku Tokyo (JP)
(72) Inventor: Ikeda, Tetsufumi, Nakahara-ku, Kawasaki-shi, Kanagawa (JP); Itoh, Takahiko, Tokyo (JP)
(74) Representative: Grünecker, Kinkeldey, Stockmair & Schwanhäusser Anwaltssozietät

(56) References cited:
- EP-A- 0 221 495
- WO-A-86/03268
- FR-A- 2 384 174
- US-A- 3 022 433
- US-A- 4 198 878

## Description

### BACKGROUND OF THE INVENTION

### 1. Field of the Invention

This invention relates to a flywheel-type power storage device which stores electrical energy by converting the electrical energy to flywheel rotation energy. This device is useful for backing up the important power sources provided for emergencies and is also useful in combination with power generation by sunlight, wind force and wave force.

### 2. Prior Art

There has heretofore been known an electrical energy storage device provided with a rotary electrical machine (or a motor for example) and a flywheel fixed to the rotor of the machine. A ball-and-roller bearing and a magnetic bearing are used as a bearing to bear the rotation axis of the rotor. Such a device in which a magnetic bearing is used, is disclosed in, for example, "27th Intersociety Energy Conversion Engineering Conference '92, Design and Manufacturing for a Composite Multi-Ring Flywheel". Further, in such a device, the flywheel is placed in a vacuum or in vacuo to prevent the flywheel from causing its energy loss due to friction between it and the air.

The rotary electrical machine which has been used in the conventional flywheel-type power storage device, however, is not suitable for use for power storage due to its energy loss. There is further raised a problem as to ball-and-roller bearings being great in power loss. It is considered to use magnetic bearings and the like which are low in power loss to eliminate the above drawback, but the above bearings and the like will not be suitable for high-speed rotation as far as the conventional rotary electrical machine provided with winding having a core is used. More particularly, the deviation of rotation axis of the rotor causes unbalance of magnetic attraction exerted on the core of the winding of the rotor whereby the deviation of the rotor is further expanded, this being a vicious cycle. It thus becomes necessary to rigidly support the rotor very securely in order to prevent the rotor from being deviated thereby to suppress said vicious cycle, but this necessity is very technically difficult to realize, will cause the device to be complicated in structure and will incur a great power loss. Accordingly, the machine having the core therein comes to have a low limit on the rotation velocity allowable for such a machine whereby the machine is unsuitable for efficient storage of electrical power.

In addition, only the flywheel is placed in a vacuum separately from the rotary electrical machine body and, therefore, there is raised a problem as to sealing of the axial portion which connects the flywheel to the rotary electrical machine body. This problem is not solved yet.

Another flywheel-type power storage device is disclosed in FR-A-2 384 174, and comprises all the features of the preamble of appended claim 1.

### SUMMARY OF THE INVENTION

The main object of this invention is to provide a novel flywheel-type power storage device which is more efficient and allows the flywheel to be easily disposed in a vacuum, in view of the prior art technical problems mentioned above.

The above object is achieved by providing a flywheel-type power storage device comprising a flywheel and a coreless-type rotary electrical machine having a stator with a stator winding having a cylindrical portion, and a rotor having inner and outer field members constituting therebetween a field gap in which said cylindrical portion is positioned, and bearing means provided between said stator and said rotor so as to rotatably support said rotor against said stator
**characterized in that**
said flywheel is fixed to the outer sider of said outer field member and made of a fiber-reinforced plastics in which the reinforcing fibers are disposed circumferentially of the flywheel and which has higher elastic moduli in the increasing order in the radial direction from the inner portion of the flywheel to the outer portion thereof, and that said stator is separated into a bearing portion constituting said bearing means and a stator body , provided with said stator winding and the bearing portion is supported via an elastic member by the stator body.

In a preferred embodiment, the stator is separated into a bearing portion constituting the bearing means and a stator body provided with the stator winding, and the bearing portion is supported via an elastic member by the stator body. In addition, the wire portions in the cylindrical portion of the stator winding are each disposed in parallel with the cylinder axis of the cylindrical portion (or rotation axis of the rotor). The flywheel is preferably made of a carbon fiber-reinforced plastics in which the carbon fibers are disposed circumferentially of the flywheel and have higher elastic moduli in the increasing order in the radial direction from the inner portion of the flywheel to the outer portion thereof. It is desirable that the bearing means have a means to bear the rotor in the thrust direction so as to maintain the rotor position in the thrust direction at a predetermined equilibrium position. The whole storage device is usually disposed in a vacuum container. Further, both or one of the outer and inner field members is composed of a magnet.

In this composition, when electrical power is supplied to the coreless-type rotary electrical machine, the power is converted to dynamic or mechanical energy by said electrical machine and then accumulated as rotation energy of a flywheel. At this point, the conversion arid accumulation of the energy is highly efficiently effected since the stator winding of the machine has no core arid the density of magnetic flux in the field members does not change thereby to incur none of energy losses which are otherwise caused due to core loss or iron loss. The energy so accumulated can be converted to electrical power with the same high efficiency as above. In contrast, in a case where the stator winding of a rotary electrical machine has a core, the electrical machine will incur a loss of 3 - 4% due to the core loss even if the machine has high performances.

Further, according to this invention, the stator winding makes no magnetic attraction between it and the field members since it has no core. Accordingly, there will be avoided the enlargement of rotor deviation caused when the winding has a core, by the magnetic attraction made between the stator winding and the field members and it will not be necessary to rigidly support the rotation axis securely since the rotation balance is not lost even if the rotation axis of the rotor deviates, whereby the conventional bearing techniques are allowed to fully cope with such deviations. Furthermore, it is made possible to support the bearing means of the stator via an elastic member since said rigid supporting comes to be unnecessary. This is very advantageously serviceable for simplifying the structure of a storage device of this invention, avoiding the resonance frequency and particularly enhancing acceptable or the maximum rotation velocity.

The coreless-type rotary electrical machine according to this invention which is a so-called outer rotor-type one has heretofore been unknown and can very easily be disposed in the central portion of the flywheel since the flywheel is designed to be fixed on the outer side of the outer field member constituting the rotor. Thus, the storage device can be constructed in a very compact size and can wholly be easily disposed in a vacuum; the connections of the device to the outside comprise only fixed ones such as cables for receiving and supplying electrical power, thereby to avoid a problem as to the sealing of the high-speed rotation axis which conventionally connects the flywheel to the rotary electrical machine.

In a case where wire portions of the cylindrical portion of the stator winding are each disposed around the cylinder axis in parallel therewith to allow the current to flow perpendicularly to the magnetic field, whereby the energy loss of the rotary electrical machine will be greatly reduced (to between about one-fourth and about one-seventh of the energy loss of the conventional one wherein skew winding around the cylinder axis is adopted).

### BRIEF DESCRIPTION OF THE DRAWINGS

Fig. 1 is a cross-section of one embodiment of a flywheel-type power storage device of this invention;
Fig. 2 shows how to assemble an inner yoke and an outer yoke;
Fig. 3 is a cross-sectional view showing the particulars of a spool portion of the device indicated in Fig. 1;
Figs. 4 - 6 are other embodiments of a spool portion of the device indicated in Fig. 1, respectively; and
Fig. 7 is a view showing the structure of a flywheel of the device indicated in Fig. 1.

### DESCRIPTION OF THE PREFERRED EMBODIMENT

This invention will be better understood by the following Example.

### Example

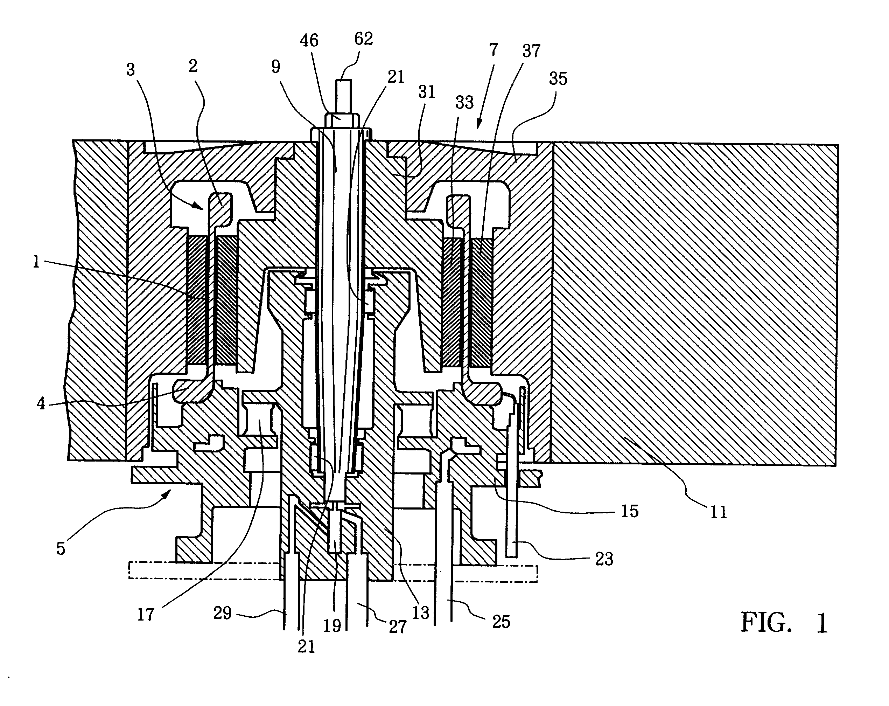

Fig.1 is a sectional view of one embodiment of a flywheel-type power storage device of this invention. As is shown in this Figure, the device comprises (1) a coreless-type rotary electrical machine having a stator 5 provided with stator winding 3 having a cylindrical portion 1 thereof and a rotor 7 provided with field members for generating a rotary field in which the cylindrical winding portion 1 is positioned, (2) a bearing means disposed between the stator 5 and the rotor 7 to rotatably support a rotation axis 9 provided in the rotor 7 and (3) a flywheel 11 fixed to the outside of an outer one of said field members.

The stator 5 is separated into a bearing member 13 constituting said bearing means, and a stator body 15 provided with the stator winding 3. The bearing member 13 is supported via a vibration-proof rubber 17 by the stator body 15. In the cylindrical winding portion 1 of the stator winding 3, the wire portions of the winding 3 are each disposed in parallel with the axis of the cylinder.

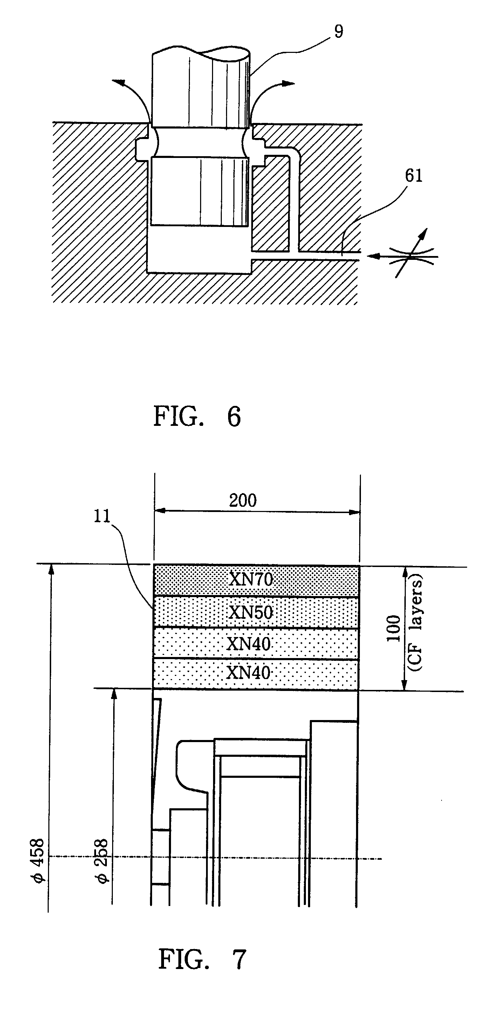

The flywheel 11 is required to be small-sized, light in weight and as great as possible in energy obtained by the rotation thereof. The energy so obtained depends for its greatness upon the weight, shape and rotation velocity of the flywheel, and it depends particularly upon the rotation velocity of the flywheel and is proportional to the square thereof. It is therefore intended herein to increase the rotation velocity as high as possible in order to enhance energy efficiency. Thus, it is preferred that the material for the flywheel 11 be light in weight and high in strength. Carbon fiber-reinforced plastics may be used herein as said material. From this standpoint, there may be used other plastics reinforced with glass fibers, aramid fibers or the like. Flywheels formed by a filament winding method in such a manner that the reinforcing fibers are disposed in agreement with the circumferential direction of the flywheel, have very high strength in their circumferential direction, while they are not so expected to have satisfactory strength but their stress in the radial direction during the rotation thereof can be lessened if their material constitution is such that "elastic modulus/density" of the fiber-reinforced plastics increases towards the outside in the radial direction and in proportion to the 3.3th power of the radius ((length of the radius)^{3.3}). Because of this, the carbon fibers for example are disposed in the circumferential direction of the flywheel and the carbon fibers used herein are increasingly high in elastic modulus from the inside to the outside of the flywheel in the radial direction as illustrated in Fig. 7.

The bearing means has a spool 19 which bears the rotation axis 9 in the thrust direction so that the thrust direction position of the rotation axis 9 is maintained at a predetermined equilibrium position by means of oil pressure control. The rotation axis 9 is borne in the radial direction by a superhigh-speed needle gauge 21.

The device of this invention is wholly housed in a vacuum container. To the outside of the vacuum container are extended a cable connected to a terminal 23 for supplying and receiving electrical power, a pipe 25 for passing cooling water therethrough, and pipes 27 and 29 respectively for passing a high-pressure oil and low pressure oil for controlling a spool 19. An extension is connected at a terminal 23 to a lead coming from the stator winding, and the connection can be effected by soldering, welding, caulking, screwing or the like.

The field members forming a field gap therebetween in which the cylindrical portion 1 is positioned, comprise an inner yoke 31 fixed to the rotation axis 9, an inner magnet 33 fixed to the inner yoke 31 and facing the cylindrical portion 1 from the inside thereof, an outer yoke 35 fixed to the inner yoke 31, and an outer magnet 37 fixed to the outer yoke 35 and facing the cylindrical portion 1 from the outside thereof. The inner and outer yokes 31 and 35 have high magnetic conductivity and are made of a high-strength magnetic material. Further, the inner-magnet 33 may be made of a highly magnetic material.

The stator winding 3 may be three-phase Y-type winding or the like, and wire portions in the cylindrical portion 1 are each disposed in parallel with the cylinder axis of the cylindrical portion. The wire portions are connected together at terminals 2 and 4.

A sensor for detecting the position of the rotor 7 may be provided between the rotor 7 and the stator 5, for example at a convenient position between the rotation axis 9 or the inner yoke 31 of the rotor 7 and the bearing member 13.

The coreless-type rotary electrical machine having such constitution as above according to this invention has almost the same structure as that described in Japanese patent application No. Hei 4-238841 (No. 238841/92) the present inventors previously filed. More particularly, the constitution is such that the stator winding 3 is wound in parallel with the rotation axis at the cylindrical portion 1 situated between the field members, a crossover track to the next winding position is thus formed at the terminals 2 and 4, and the terminal 2 is allowed to be larger in size than the field gap. After the stator winding 3 is provided at the outer yoke 35 to which the outer magnet 37 is fixed, the inner yoke 31 having the inner magnet 33 fixed thereto is fixed for fabrication of the rotary electrical machine. In the conventional coreless-type rotary electrical machine, skew winding which needs no crossover tracks has been adopted as winding so as to enable the winding to be inserted into a previously prepared field gap for fabrication of the machine; thus, each of the wire portions of the winding obliquely crosses the magnetic field formed by the field members. In contrast, in the coreless-type rotary electrical machine according to this invention, the crossover portion is provided at the terminals and the wire portions of the winding are each disposed in parallel with the rotation axis thereby to allow each of said wire portions to perpendicularly cross the magnetic field, resulting in considerable enhancement of the efficiency of the machine as compared with the conventional one.

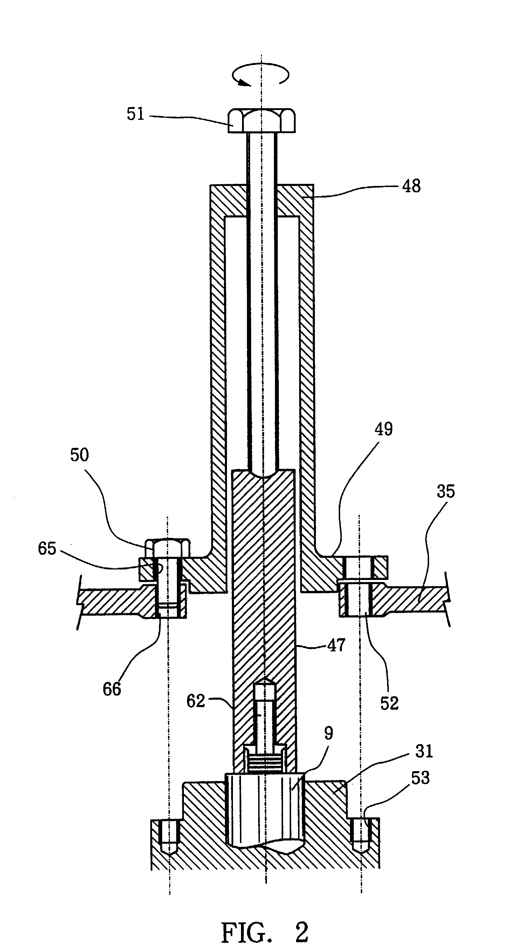

Fig. 2 shows a method for assembling the inner yoke 31 and the outer yoke 35. This assembly is effected as follows.

First of all, a nut 46 at the top of the rotation axis 9 shown in Fig. 1 is disengaged while the bearing member 13 provided with the rotation axis 9 and the stator 5 is fixed to the floor of a vacuum container or a platform for use in assembly, after which a guide rod 47, instead of the nut 46, is so manipulated that a pin 62 ( for use in centering) is positioned within the guide rod 47 to engage both of them with each other by screwing. On the other hand, the outer yoke 35 is screwed by a bolt 50 as if it were suspended from the under side of a flange 49 of an outer cylinder 48 and, thereafter, a long-sized bolt 51 for jacking is screwed deep into the outer cylinder 48. The flange 49 of the outer cylinder 48 has provided with a hole 65 for screwing the outer yoke 35 and openings (not shown) for facilitating the screwing of the outer yoke 35 to the inner yoke 31. Further, the outer yoke 35 is provided with a threaded hole 66 for screwing said yoke 35 to the flange 49. Then, the outer cylinder 48 is manipulated so that the guide rod 47 is positioned within the outer cylinder 48. At this point, the long-sized bolt 51 contacts the top end of the guide rod 47 and, therefore, the magnet 37 on the outer yoke 35 does not reach the top position of the magnet 33 or magnetic path (yoke) of the inner yoke 31. Thereafter, the long-sized bolt 51 is returned upward whereby the outer yoke 35 is made to descend and the magnets 37 and 33 begin to overlap each other to exert a strong force in the radial direction (lateral direction). The outer yoke 35, however, still descends with aid of guiding action of the guide rod 47 without contact with the winding 3 and the like. When the outer yoke 35 descends to the position indicated in Fig. 1, openings 52 of the outer yoke 35 and threaded holes 53 of the inner yoke 31 are overlapped each other to be screwed together with screws for fabrication or assembly. Then, the bolt 50 connecting the outer yoke 35 to the flange 49 is disengaged, the outer cylinder is removed, and the guide rod 47 is disengaged.

The inner yoke 31 and the outer yoke 35 are assembled together in accordance with the above procedures. If the guide rod 47 and the outer cylinder 48 are high in accuracy, the eccentricity between the yokes 31 and 35 will be lessened and the force in the radial direction is minimized, thereby to facilitate the assembly of the yokes. The disassembly of the yokes is effected in the order reverse to the above assembly order. The threaded hole 66 made in the outer yoke 35 to screw the yoke 35 to the flange 49 with the bolt 50 is provided separately from the fixing hole 52 and, however, the hole 52 may be used instead of the threaded hole 66 if threaded.

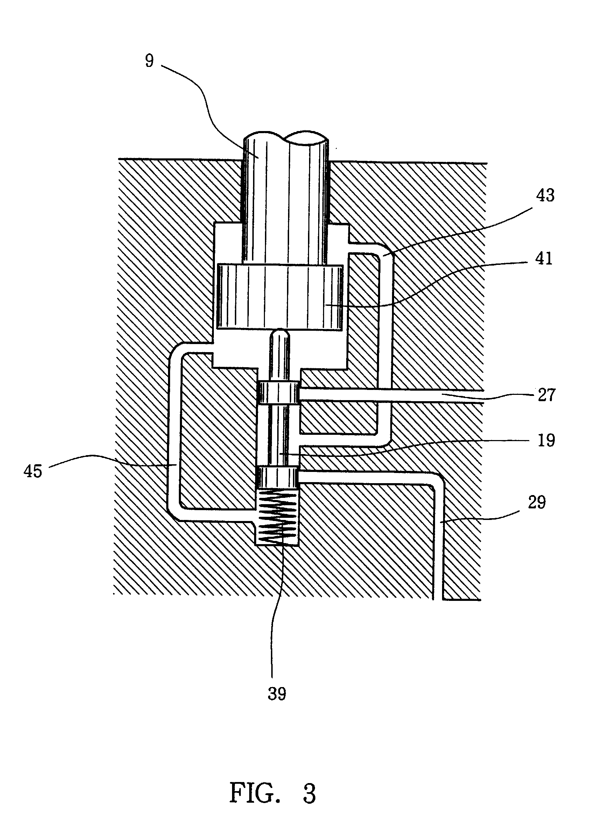

Fig. 3 is a cross-sectional view showing the particulars of a portion of the present device, the portion including a spool 19. With reference to this Figure, when the rotation axis 9 descends beyond the equilibrium position (assuming that the Figure shows the rotation axis 9 to be at the equilibrium position), the spool also descends against a spring 39 whereby a high-pressure oil is supplied to beneath a piston 41 situated just under the lower end of the rotation axis 9 to exert an upward force on the bottom of the piston 41. At this point, the oil present above the piston 41 is returned via pipes 43 and 29 to a drain tank thereby to push the rotation axis 9 upward as far as it reaches the equilibrium position. Reversely, when the rotation axis 9 ascends beyond the equilibrium position, the high-pressure oil is supplied to above the piston 41 via pipes 27 and 43 while the oil present under the piston 41 is drained via pipes 45 and 29, whereby the rotation axis 9 is pushed down as far as it reaches the equilibrium position. In this manner, the rotation axis 9 is designed to be maintained at the equilibrium position.

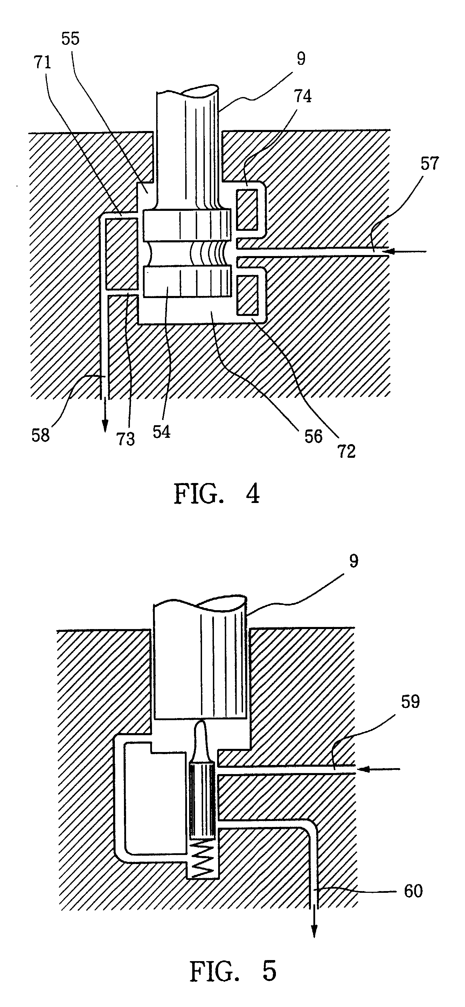

Figs. 4 - 6 are other embodiments of a bearing portion for bearing the rotation axis in the thrust direction, respectively. In the bearing portion of Fig. 4, when a piston 54 descends, an upper room 55 opens at its drain port 71 to drain an oil through a pipe 58, while a high-pressure oil enters a lower room 56 via a pipe 57 through a pressure port 72 thereby enabling a piston 54 to ascend. When the piston 54 ascends too far, the lower room 56 opens at its drain port 73 while a high-pressure oil enters the upper room 55 from the pressure port 74 thereby to allow the piston 54 to descend. This operation is free from hunting under wider condition of the mass of rotor assembly, the viscosity of the oil used, and the like. This operational system is called "one body-type dual-acting" one and is based on the same acting principle as spool-type dual action.

Each of Figs. 5 - 6 illustrates a bearing system for a large-sized stationary device in which minus G (force in the ascending direction) is not considered. Briefly stated, all an axial bearing has to do is only to bear a downward force. In the bearing system of Fig. 5, a high-pressure oil is supplied through a pipe 59 and then drained through a pipe 60. This is single action, but is the same in acting principle as the bearing system of Fig. 3. In the bearing system, when the amount of a high-pressure oil supplied through a pipe 61 is set at a certain fixed value which is regulated or controlled by means of a variable orifice or a variable output pump, the rotation axis 9 will stop at such a position (height) that the amount of the oil supplied and the amount thereof drained are balanced with each other.

The oil for use in "roller bearing" or "hydraulic axial thrust supporting device" which is used as a bearing means under a vacuum, is preferably a low vapor pressure oil (an oil for vacuum pumps) such as Fairback Gold (tradename) produced by Nippon Oil Co., Ltd.

Fig. 7 is a schematic view showing the structure of a flywheel 11. As indicated in the Figure, the flywheel is constructed so that it gradually increases in elastic modulus radially from the inner side to the outer side thereof. For example, the innermost two layers are made of a carbon fiber-reinforced plastics in which the carbon fibers are commercially available ones supplied under tradename of XN40 by Nippon Oil Co., Ltd., the third layer is made of such a plastics in which the carbon fibers are XN50 in tradename and the outermost layer is made of such a plastics in which the carbon fibers are XN70 in tradename.

The flywheel made of the plastics and having the size as indicated in Fig. 7 was tested for its performances with the result that it exhibited a maximum of 35,600 r.p.m. and a storage energy density of 67 Wh/kg.

### (Effect of the invention)

As so far mentioned, this invention enables energy loss due to core loss to be avoided and also enables the conversion, accumulation and release of energy to be efficiently effected. Further, this invention makes it possible to avoid an increase in deviation of the rotor, which otherwise occurs when the winding has a core, due to magnetic attraction between the field member and the rotor. Accordingly, it is made unnecessary to rigidly support the rotation axis, and the conventional bearing technique is enabled to satisfactorily cope with problems as to said support. Further, since it is unnecessary to rigidly support the rotation axis, the bearing means can be supported via an elastic member with respect to the stator body whereby the device can be constructed simply and the maximum rotation velocity (r.p.m.) can be widely enhanced. Furthermore, the rotary electrical machine can very easily be disposed in the central portion of the flywheel thereby to make the device very compact and easily dispose the whole of the device in a vacuum. At this point, connections from the device to the outside are satisfied with only fixed ones such as cables for supplying or receiving electrical power, and there are avoided problems as to the sealing of the high-speed rotation axis which connects the flywheel to the rotary electrical machine. Still further, the efficiency of the rotary electrical machine can be enhanced to several times as high as that of conventional one by disposing each of the wire portions in the cylindrical portion of the stator winding in parallel with the cylinder axis.

## Claims

1. A flywheel-type power storage device comprising a flywheel (11) and a coreless-type rotary electrical machine having a stator (5) with a stator winding (3) having a cylindrical portion (1), and a rotor (7) having inner and outer field members (31,33,35,37) constituting therebetween a field gap in which said cylindrical portion (1) is positioned, and bearing means provided between said stator (5) and said rotor (7) so as to rotatably support said rotor (7) against said stator (5)
**characterized in that**
said flywheel (11) is fixed to the outer sider of said outer field member (35,37) and made of a fiber-reinforced plastics in which the reinforcing fibers are disposed circumferentially of the flywheel (11) and which has higher elastic moduli in the increasing order in the radial direction from the inner portion of the flywheel to the outer portion thereof, and that said stator (5) is separated into a bearing portion (13) constituting said bearing means and a stator body (15) provided with said stator winding (3) and the bearing portion (13) is supported via an elastic member (17) by the stator body (15).

2. A flywheel-type power storage device according to claim 1
**characterized in that**
said inner and outer field members (31,33,35,37) comprises an inner yoke (31) fixed to a rotation axis (9) and an outer yoke (35) fixed to the inner yoke (31) and said flywheel is fixed to the outer side of said outer yoke (35).

3. A flywheel-type power storage device according to claim 1 or 2
**characterized in that**
crossover portions (2,4) are provided at both ends of said cylindrical portion (1) of said stator winding (3) so that wire portions in said cylindrical portion (1) are each disposed in parallel with the rotation axis (9) of the rotor (7) whereby to allow each of said wire portions to perpendicularly cross the magnetic field.

4. A flywheel-type power storage device according to one of claims 1 to 3
**characterized in that**
at least one of the inner and outer field members comprises a permanent magnet (33,37).

5. A flywheel-type power storage device according to one of claims 1 to 4
**characterized in that**
said reinforcing fiber is at least one member selected from the group consisting of a carbon fiber, a glass fiber or an aramid fiber.

6. A flywheel-type power storage device according to one of claims 1 to 5
**characterized in that**
said bearing means has a means to bear the rotor (7) in the thrust direction so as to maintain the rotor (7) in the thrust direction at a predetermined equilibrium position.

7. A flywheel-type power storage device according to one of claims 1 to 6
**characterized in that**
said flywheel-type power storage device is disposed in a vacuum container.

## Revendications

1. Dispositif accumulateur d'énergie du type à volant, comprenant un volant (11) et une machine électrique rotative du type sans noyau, ayant un stator (5) avec un enroulement de stator (3) ayant une portion cylindrique (1), et un rotor (7) ayant des éléments de champ intérieur et extérieur (31, 33, 35, 37) constituant entre eux un entrefer dans lequel est positionnée ladite portion cylindrique (1), et des moyens de palier prévus entre ledit stator (5) et ledit rotor (7) de façon à supporter en rotation ledit rotor (7) par rapport au stator (5), caractérisé en ce que
ledit volant (11) est fixé sur le côté extérieur dudit élément de champ extérieur (35, 37), et est fait d'une matière plastique renforcée par des fibres, les fibres étant disposées selon la circonférence du volant (11) et ayant des modules d'élasticité allant croissant dans la direction radiale depuis la portion intérieure du volant jusqu'à sa portion extérieure, et en ce que ledit stator (5) est séparé en une portion de palier (13) constituant lesdits moyens de palier et un corps de stator (15) muni dudit enroulement de stator (3), et la portion de palier (13) étant supportée par le corps de stator (15) par l'intermédiaire d'un élément élastique (17).

2. Dispositif accumulateur d'énergie du type à volant selon la revendication 1, caractérisé en ce que
lesdits éléments de champ intérieur et extérieur (31, 33, 35, 37) comprennent une culasse intérieure (31) fixée sur un axe de rotation (9) et une culasse extérieure (35) fixée sur la culasse intérieure (31) et en ce que ledit volant est fixé sur le côté extérieur de ladite culasse extérieure (35).

3. Dispositif accumulateur d'énergie du type à volant selon la revendication 1 ou la revendication 2, caractérisé en ce que
des portions de croisement (2, 4) sont prévues au niveau des deux extrémités de ladite portion cylindrique (1) dudit enroulement de stator (3) de telle sorte que les portions de fil dans ladite portion cylindrique (1) sont chacune disposées en parallèle avec l'axe de rotation (9) du rotor (7) de façon à permettre ainsi à chacune desdites portions de fil de croiser perpendiculairement le champ magnétique.

4. Dispositif accumulateur d'énergie du type à volant selon l'une des revendications 1 à 3, caractérisé en ce qu'au moins l'un des éléments de champ intérieur et extérieur comprend un aimant permanent (33, 37).

5. Dispositif accumulateur d'énergie du type à volant selon l'une des revendications 1 à 4, caractérisé en ce que
ladite fibre de renforcement est au moins une fibre choisie dans le groupe comprenant une fibre de carbone, une fibre de verre ou une fibre aramide.

6. Dispositif accumulateur d'énergie du type à volant selon l'une des revendications 1 à 5, caractérisé en ce que
lesdits moyens de palier ont un moyen pour supporter le rotor (7) dans la direction de la poussée de façon à maintenir le rotor (7) dans la direction de la poussée dans une position d'équilibre prédéterminée.

7. Dispositif accumulateur d'énergie du type à volant selon l'une des revendications 1 à 6, caractérisé en ce que
ledit dispositif accumulateur d'énergie du type à volant est disposé dans une enceinte à vide.

## Patentansprüche

1. Eine Schwungrad-Energiespeichervorrichtung, die umfaßt
ein Schwungrad (11) und eine drehelektrische Maschine (5) vom kernlosen Typ, die einen Stator (5) aufweist mit einer Statorwindung (3), die einen zylindrischen Abschnitt (1) umfaßt, und einen Rotor (7) aufweist, der innere und äußere Feldelemente (31,33,35,37) aufweist, die zwischen ihnen einen Feldspalt, in der dieser zylindrische Abschnitt (1) positioniert ist, bilden, und eine Lagereinrichtung, die zwischen diesem Stator (5) und diesem Rotor (7) vorgesehen ist, um diesen Rotor (7) gegen diesen Stator (5) drehbar zu lagern, **dadurch gekennzeichnet,** daß
dieses Schwungrad (11) an der äußeren Seite des äußeren Feldelements (35,37) befestigt ist und aus faserverstärktem Kunststoff gebildet ist, in den die Verstärkungsfasem umlaufend auf dem Schwungrad (11) angeordnet sind, und welche einen höheren Elastizitätsmodul in ansteigender Weise in der radialen Richtung von dem inneren Abschnitt des Schwungrades zu dessen äußeren Abschnitt aufweisen, und daß dieser Stator (5) geteilt ist in einen Lagerabschnitt (13), der diese Lagereinrichtung bildet und einen Statorkörper (15), der mit der Statorwindung (3) versehen ist, und der Lagerabschnitt (13) über ein elastisches Element (17) durch den Statorkörper (15) getragen ist.

2. Eine Schwungrad-Energiespeichervorrichtung nach Anspruch 1, **dadurch gekennzeichnet,** daß diese inneren und äußeren Feldelemente (31,33,35,37) ein inneres Joch (31), das an einer Drehachse (9) befestigt ist, und ein äußeres Joch (35), das an dem inneren Joch (31) befestigt ist, aufweisen, und dieses Schwungrad ist an der äußeren Seite dieses äußeren Jochs (35) befestigt.

3. Eine Schwungrad-Energiespeichervorrichtung nach Anspruch 1 oder 2, **dadurch gekennzeichnet,** daß Kreuzungsabschnitte (2,4) an beiden Enden des zylindrischen Abschnitts (1) der Statorwindung (3) vorgesehen sind, so daß Leitungsabschnitte in dem zylindrischen Abschnitt (1) jeweils parallel mit der Drehachse (9) des Rotors (7) angeordnet sind, um jeden dieser Leitungsabschnitte zu erlauben, das magnetische Feld senkrecht zu kreuzen.

4. Eine Schwungrad-Energiespeichervorrichtung nach einem der Ansprüche 1 bis 3, **dadurch gekennzeichnet,** daß zumindest eines der inneren und äußeren Feldelemente einen permanenten Magneten (33,37) aufweist.

5. Eine Schwungrad-Energiespeichervorrichtung nach einem der Ansprüche 1 bis 4, **dadurch gekennzeichnet,** daß diese Verstärkungsfaser zumindest ein Element ist, ausgewählt aus der Gruppe, die aus einer Karbonfaser, einer Glasfaser oder einer Aramidfaser besteht.

6. Eine Schwungrad-Energiespeichervorrichtung nach einem der Ansprüche 1 bis 5, **dadurch gekennzeichnet,** daß die Lagereinrichtung eine Einrichtung zur Lagerung des Rotors (7) in der Lastrichtung sowie zum Halten des Rotors (7) in der Lastrichtung in einer vorgegebenen Gleichgewichtslage aufweist.

7. Eine Schwungrad-Energiespeichervorrichtung nach einem der Ansprüche 1 bis 6, **dadurch gekennzeichnet,** daß diese Schwungrad-Energiespeichervorrichtung in einem Vakuumbehälter angeordnet ist.
